# EUROPEAN PATENT SPECIFICATION

(11) **EP 2 020 432 B1**
(45) Date of publication and mention of the grant of the patent: **10.11.2010**
(21) Application number: 08012699.8
(22) Date of filing: 14.07.2008
(51) Int. Cl.: C11D 13/16, C11D 13/18, B29C 43/18

(54) **Pneumatic soap bar ejector quick change system from matrix**
Schnellwechselsystem auf Matrixbasis für einen pneumatischen Seifenstückspender
Système de changement rapide d'éjecteur pneumatique de barre de savon à partir d'une matrice

(30) Priority: 17.07.2007 AR P070103177 U
(43) Date of publication of application: 04.02.2009
(73) Proprietor: Collazuol, Eduardo José, Rosario 2000 (AR)
(72) Inventor: Collazuol, Eduardo José, Rosario 2000 (AR)
(74) Representative: Lorente Berges, Ana

(56) References cited:
- EP-A- 1 162 256
- WO-A-93/16858
- US-A- 3 142 863
- US-A- 3 535 414
- US-A- 3 587 144

## Description

### TITLE AND TECHNICAL AREA:

This invention refers to a quick-change system for pneumatic soapbar ejection devices from the main component.

The system mentioned is made up of a device and procedure used to make this quick change with the molding of a plastic mold, which is directly related to the manufacturing procedure and specifically related to the stamping or molding of the soap bars.

When we mention soap bars, it is understood more in a broad sense, considering the plastic material of the fabric, as well as the detergents and their mixtures, etc.

### STATE OF THE ART AND PROBLEMS TO SOLVE:

A stamp mold system is used to shape the bars of soap. Dies are used in this process which are synthetically made up of two parts that will stamp the desired shape. In the matrices, the device that ejects the stamped bars from the cavity that holds it is activated through air pressure injection. This device then retracts to its original position, usually using a spring, but another method can also be used for this purpose.

These systems must be disassembled frequently for cleaning and when being replaced, since they usually have the brand or design of the bar of soap in bas-relief.

With the methods currently being used it is necessary to remove the matrix from the stamping machine in order to perform these tasks.

Document US-A-3 535 414 relates to an improved die stamping process for soap tablets and the like, wherein the respective dies of a die pair are arranged to come almost together in order to form a final product (soap tablet). The process does not show any security system or device such as the one disclosed herein to hold the various system parts together.

WO 93/16858 A is based on a finite surface 19 which cooperates with the cake 11 in such a manner that the axial force required to detach the adapter 18 from the cake is substantial. As the inventors themselves recognize "It is believed that the binding or holding force is primarily due to an atmospheric pressure bond between the cake 11 and finite adapter surface 18." It will be apparent from the description below that the system herein disclosed is simpler and more economical to implement.

US-A-3 142 863 discloses a forming machine with the purpose of attaining a high hourly output and still keeping the moulding speed with reasonable limits. It does not mention any device of the kind shown in the present invention for an easy assembly, disassembly and securing of the components of a moulding system intended to form soap bars.

Patent EP-A-1 162 256 has the objects of: providing a molding apparatus for producing cakes of soap or the like which considerably simplifies the separation and removal of the soap waste from the mold after molding, making said waste available in an already cut-up form, so that it can be handled and disposed of easily; providing a molding apparatus which effectively avoids the possibility of accidental separation of the cakes of soap from the mold after molding, thus preventing their fall and consequent damage; providing a molding apparatus for producing cakes of soap or the like which is highly reliable in operation and requires reduced maintenance interventions.

US-A-3 587 144 provides and ejecting mechanism for a machine intended for forming frangible flying targets. A combination of ejector rings and ejected air is used to strip the target from the associated mold section.

### BRIEF DESCRIPTION OF THE INVENTION:

This is a pneumatic soap bar ejector quick change system from the matrix, where changing the ejector or cleaning it can be done while the matrices are still mounted on the machine. Also, in the system to be registered with this document, the set bolt acts as a safety measure, always holding the ejectors more in case the screws holding each one with a spring and cover accidentally become loose.

According to the preferred embodiment of the invention, the pneumatic soap bar ejector quick change system includes a cross bolt arranged for holding or releasing a pneumatic ejector. The cross bolt is placed releasably just below the external side of the ejector arranged to eject and stamp the soap bar after being molded, and is placed over a spring of a holding cover, a set screw and the holding cover itself in a retaining relationship. Furthermore, said ejector is adapted to be pushed outwardly by means of pressure injected air, through the cover set by the above mentioned screw, thus ejecting said bar of soap and also compressing said spring against the cross bolt.

With this changing system used to change the ejection device, the cross bolt is removed, and stays released; after performing this process in reverse (placing the device in its housing and adding the bolt) it is installed.

### DESCRIPTION OF DRAWINGS:

In order to make the purpose of the invention easier to understand, it has been illustrated in three (3) figures, one shows the preferred methods of execution, which is kept as an example; and includes:

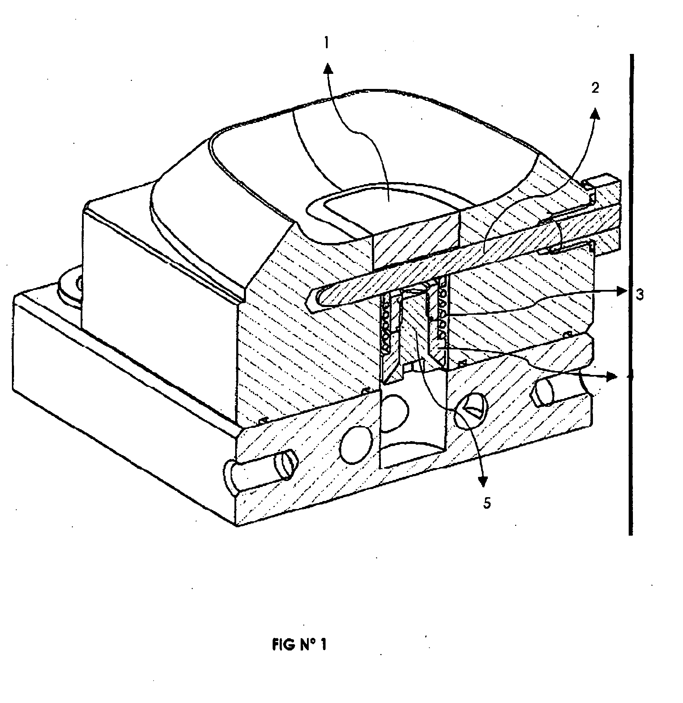

Figure 1, is a perspective view and sectional view, allowing to see from above and below, the inside of the matrix and its internal components, basically, the holding system of the ejector with the cross bolt.

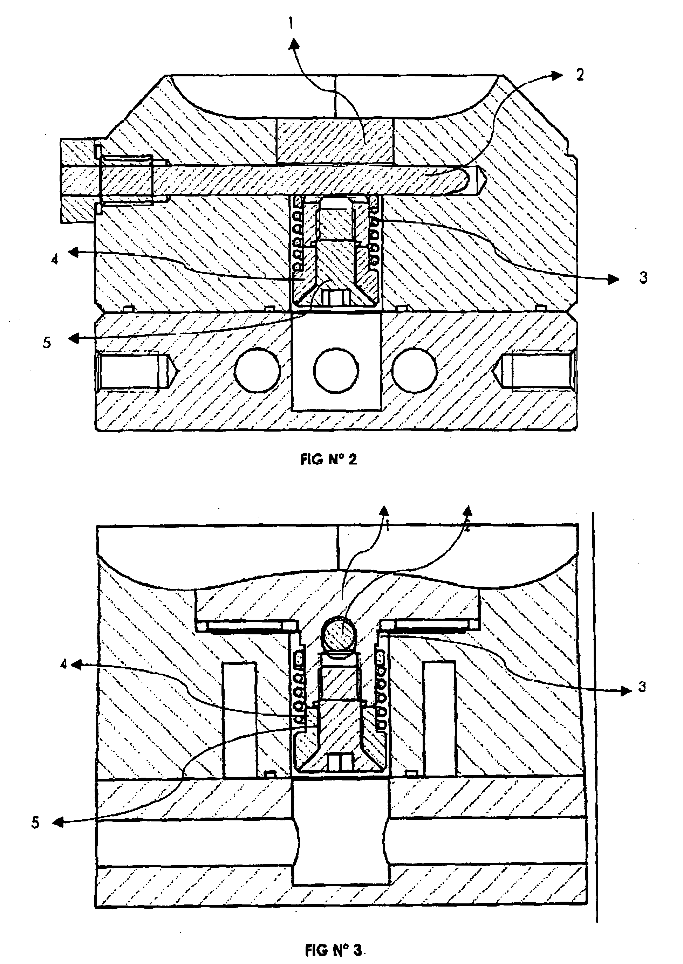

Figure 2, is a cross-sectional view that shows the location of the parts and allows us to understand the system's operation.
Figura 3, also includes a lengthwise view, which allows us to see the frontal position of the set bolt and the layout of the rest of the elements of the matrix that make up the operation of this system.

### DETAILED DESCRIPTION OF THE INVENTION:

The objective of this invention, to quickly change the pneumatic ejection device of soap bars from the matrix, is achieved by making it possible to remove the ejector without removing the matrix from the stamping machine, by simply releasing the cross bolt and injecting pressurized air, as usually done by the machine, in order to eject it. This way, the ejector can be removed and cleaned or replaced and another ejector can be inserted into its housing along with the cross bolt, making the machine functional once again, avoiding wasted time, risks of accidents during handling and preserving the integrity of the matrix.

In all of the figures, the numbers that are referenced Indicate similar or corresponding elements.

As can be seen in the set of figures, the operating principle of this system is based on the spring 3 being compressed against the cross bolt 2 by a jet or jets of pressure-injected air which push(es) the ejector 1 outwardly to eject the bar of soap, through the cover held in position by the screw 5. When the system is depressurized, the spring 3 retracts the system to its original position.

In order to remove the ejection device, made up of the ejector 1, spring 3, cover 4 and set screw 5, only the cross bolt 2 has to be removed, releasing the system, and it suffices with merely injecting compressed air, either through the stamping machine or manually, so that the device or devices are ejected from their housings.

The cross bolt 2 acts as a safety measure, since if the screw 5 became loose, it would keep each ejector connected to its spring 3 and holding cover 4. Said bolt 2 keeps the ejectors held in their respective housing and the rest of the parts remain in the air chamber.

## Claims

1. **PNEUMATIC SOAP BAR EJECTOR QUICK CHANGE SYSTEM FROM MATRIX, characterized by** the fact that it includes a cross bolt (2) arranged for holding or releasing the pneumatic ejector (1) such that it is placed releasably just below the external side of the ejector (1) arranged to eject and stamp the soap bar after being molded, and is placed over the spring (3) of the holding cover (4), the set screw (5) and the holding cover (4) itself in a retaining relationship, wherein said ejector (1) is adapted to be pushed outwardly by means of pressure injected air, through the cover (4) set by the screw (5), thus ejecting said bar of soap and compressing said spring (3) against the cross bolt (2).

## Patentansprüche

1. **SCHNELLWECHSELSYSTEM FÜR EINE PNEUMATISCHE VORRICHTUNG ZUM AUSWERFEN VON SEIFENRIEGELN AUS DER MATRIZE, gekennzeichnet durch** die Tatsache, dass es enthält: einen Querbolzen (2), der so angeordnet ist, dass er die pneumatische Auswurfvorrichtung (1) hält oder freigibt, so dass es abnehmbar direkt unter der Außenseite der Auswurfvorrichtung (1) untergebracht ist, welche so angeordnet ist, dass sie den Seifenriegel nach dem Formen auswirft und stanzt, und über der Feder (3) des Haltemantels (4), der Stellschraube (5) und dem Haltemantel (4) selbst in einer haltenden Anordnungsbeziehung angeordnet ist, wobei die Auswurfvorrichtung (1) so angepasst ist, dass sie mittels eingespritzter Pressluft durch den mittels Schraube (5) eingestellten Mantel (4) nach außen gestoßen wird, so dass der Seifenriegel ausgeworfen wird, und die Feder (3) gegen den Querbolzen (2) gedrückt wird.

## Revendications

1. Système de changement rapide d'éjecteur pneumatique de pain de savon à partir d'une matrice, **caractérisé en ce qu'**il inclut un boulon transversal (2) agencé pour retenir ou libérer l'éjecteur pneumatique (1), ledit boulon étant positionné de manière libérable immédiatement en dessous du côté extérieur de l'éjecteur (1) et étant agencé pour éjecter et estampiller le pain de savon après qu'il ait été moulé, ledit boulon étant placé au dessus du ressort (3) du couvercle de maintien (4), de la vis de réglage (5) et du couvercle de maintien (4) lui-même dans une relation de retenue, ledit éjecteur (1) étant adapté pour être poussé vers l'extérieur au moyen d'air injecté sous pression, au travers du couvercle (4) positionné par la vis (5), éjectant ainsi ledit pain de savon et comprimant ledit ressort (3) contre le boulon transversal (2).
